# EUROPEAN PATENT APPLICATION

(11) **EP 4 292 987 A1**
(43) Date of publication of application: **20.12.2023**
(21) Application number: 23170159.0
(22) Date of filing: 26.04.2023
(51) Int. Cl.: C01G 53/00, H01M 4/505, H01M 4/525

(54) **POSITIVE ELECTRODE ACTIVE MATERIAL AND LITHIUM SECONDARY BATTERY COMPRISING THE SAME**

(30) Priority: 16.06.2022 KR 20220073305
(71) Applicant: ECOPRO BM CO., LTD., Cheongju-si, Chungcheongbuk-do 28116 (KR)
(72) Inventor: JO, Min Su, 28116 Chungcheongbuk-do (KR); KONG, Bo Hyun, 28116 Chungcheongbuk-do (KR); CHOI, Moon Ho, 28116 Chungcheongbuk-do (KR); SUH, Jun Won, 28116 Chungcheongbuk-do (KR)
(74) Representative: Vossius & Partner Patentanwälte Rechtsanwälte mbB

(57) **Abstract**

The present invention relates to a positive electrode active material, and a lithium secondary battery using a positive electrode including the same. More particularly, the present invention relates to a positive electrode active material that has increased efficiency in the diffusion of lithium ions and/or charges and increased structural stability by locally forming regions with different concentrations of an arbitrary transition metal in a primary particle, and a lithium secondary battery using a positive electrode including the same.

## Description

### BACKGROUND

### 1. Field of the Invention

The present invention relates to a positive electrode active material and a lithium secondary battery using a positive electrode including the positive electrode active material. More particularly, the present invention relates to a positive electrode active material that has increased efficiency in diffusion of lithium ions and/or charges and increased structural stability by locally forming regions with different concentrations of an arbitrary transition metal in a primary particle, and a lithium secondary battery using a positive electrode including the same.

### 2. Discussion of Related Art

Batteries store electrical power by using materials facilitating an electrochemical reaction at a positive electrode and a negative electrode. As a representative example of such batteries, there is a lithium secondary battery storing electrical energy by means of a difference in chemical potential when lithium ions are intercalated/deintercalated into/from a positive electrode and a negative electrode.

The lithium secondary battery uses materials enabling reversible intercalation/deintercalation of lithium ions as positive electrode and negative electrode active materials, and is manufactured by charging a liquid organic electrolyte or a polymer electrolyte between the positive electrode and the negative electrode.

As a positive electrode active material of the lithium secondary battery, a lithium composite oxide may be used, and for example, composite oxides such as LiCoO₂, LiMn₂O₄, LiNiO₂, LiMnO₂ are being studied.

Among the positive electrode active materials, LiCoO₂ is most widely used due to excellent lifetime characteristics and charge/discharge efficiency, but it is expensive due to cobalt being a limited resource, which is used as a raw material, and thus has a disadvantage of limited price competitiveness.

Lithium manganese oxides such as LiMnO₂ and LiMn₂O₄ have advantages of excellent thermal safety and low costs, but also have problems of small capacity and poor high-temperature characteristics. In addition, while a LiNiO₂-based positive electrode active material exhibits a battery characteristic such as a high discharge capacity, due to cation mixing between Li and a transition metal, it is difficult to synthesize the LiNiO₂-based positive electrode active material, thereby causing a big problem in rate characteristics.

In addition, depending on the intensification of such cation mixing, a large amount of Li by-products is generated. Since most of the Li by-products consist of LiOH and Li₂CO₃, they may cause gelation in preparation of a positive electrode paste or cause gas generation according to repeated charge/discharge after the manufacture of an electrode. Residual Li₂CO₃ not only increases cell swelling to reduce the number of cycles, but also causes the swelling of a battery.

Meanwhile, recently, lithium-based composite oxides in which Ni, Co, Mn and/or Al are complexed have been developed as a positive electrode active material. Generally, such lithium-based composite oxides have advantages of increasing energy density and improving output characteristics as the Ni content increases, similar to a LiNiO₂-based positive electrode active material, but on the other hand, are accompanied by the problem of increasing resistance characteristics. Accordingly, in the lithium-based composite oxides in which Ni, Co, Mn and/or Al are complexed, the development of a positive electrode active material that can prevent degradation in resistance and lifetime characteristics while maintaining the excellent reversible capacity of LiNiO₂ is required.

### SUMMARY OF THE INVENTION

In the lithium secondary battery market, the growth of lithium secondary batteries for electric vehicles is driving the market, and accordingly, the demand for positive electrode materials used in lithium secondary batteries is also continuously increasing.

For example, conventionally, to ensure stability, lithium secondary batteries using LFP have mainly been used, but recently, the use of a nickel-based lithium composite oxide having a larger energy capacity per weight than LFP tends to be increasing.

In line with such trends of positive electrode active materials, the present invention is directed to providing a high-Ni lithium composite oxide and/or a positive electrode active material including the same for implementing high-capacity cells for automobiles. However, in the case of high-Ni lithium composite oxides known so far, the higher the Ni content, the larger the resistance, and thus the lifetime deteriorates.

Likewise, as the Ni content in the lithium composite oxide increases, it is believed that one of the causes of the increase in resistance is insufficient diffusion of lithium ions and/or charges in the lithium composite oxide, particularly, on the surface of the lithium composite oxide.

In addition, as the Ni content increases, the structural instability of the lithium composite oxide increases, and thus the possibility of the crystal structure of the lithium composite oxide changing or collapsing during charging/discharging of a lithium secondary battery may increase. Moreover, the structural instability of the lithium composite oxide may cause a side reaction, resulting in irreversible capacity loss of the positive electrode active material.

Accordingly, the present invention is directed to providing a positive electrode active material that has increased efficiency in the diffusion of lithium ions and/or charges by locally forming regions with different concentrations of an arbitrary transition metal in a primary particle.

In addition, the present invention is directed to providing a positive electrode active material that has improved structural stability by locally forming regions with different concentrations of an arbitrary transition metal in a primary particle.

In addition, the present invention is directed to providing a positive electrode slurry composition that includes the positive electrode active material defined herein.

Moreover, the present invention is directed to providing a lithium secondary battery that includes a positive electrode formed by coating a current collector with the positive electrode slurry composition defined herein.

The objects of the present invention are not limited to the above-mentioned objects, and other objects and advantages of the present invention which are not mentioned can be understood by the following description and more clearly understood by exemplary embodiments of the present invention. In addition, it will be readily apparent that the objects and advantages of the present invention may be realized by the means indicated by the claims and a combination thereof.

One aspect of the present invention provides a positive electrode active material for a lithium secondary battery, which includes primary particles capable of reversible intercalation/deintercalation of lithium ions and a secondary particle in which the primary particles are aggregated.

Here, the primary particle is a lithium composite oxide including at least one selected from Ni, Co, Mn and Al as a transition metal.

Specifically, the lithium composite oxide may include Ni and Co, Ni and Mn, Ni and Al, Ni, Co and Mn, Ni, Co and Al, or Ni, Co, Mn and Al. In addition, the lithium composite oxide may include a doping metal in addition to the transition metal.

The secondary particle is an aggregate formed by aggregating a plurality of the primary particles, and is also referred to as a bulk or bulk particle. The secondary particle may be divided into a central portion corresponding to a region relatively close to the very center of the secondary particle and a surface portion corresponding to a region close to the outer surface of the secondary particle.

Briefly, based on the average radius of the secondary particle, a region defined by a distance from the very center to half the average radius of the secondary particle may be referred to as a central portion, and a region defined by a distance from the outer surface to half the average radius of the secondary particle may be referred to as a surface portion.

In one embodiment, when the average atomic proportion of an arbitrary transition metal present in the primary particle is a, the secondary particle may include a primary particle in which a first region in which the average atomic proportion of the arbitrary transition metal is greater than a and a second region in which the average atomic proportion of the arbitrary transition metal is equal to or less than a coexist. That the secondary particle includes a primary particle in which the first region and the second region coexist means that the secondary particle may include a first particle in which there is no concentration change region divided into the first region and the second region.

Whether there are the first region and the second region in the primary particle may be confirmed from a cross-sectional TEM image. In addition, it may also be confirmed by various known means that can observe the concentration change of an arbitrary transition metal in the primary particle, other than the cross-sectional TEM image.

As described above, when the first region and the second region coexist in the primary particle, at least one region selected from the first region and the second region may be locally present in the primary particle and thus may have a difference in the diffusion of lithium ions and/or charges between the first and second regions. The difference in the diffusion of lithium ions and/or charges may contribute to the formation of a diffusion path for lithium ions and/or charges.

In one embodiment, the primary particle may be a lithium composite oxide including at least Ni and Co. Here, when the average atomic proportion of Ni present in the primary particle in which the first region and the second region coexist is a1 and the average atomic proportion of Co therein is a2, the average atomic proportion (b1) of Ni in the first region may be a1 or less, and the average atomic proportion (b2) of Co in the first region may be greater than a2.

In another embodiment, the primary particle may be a lithium composite oxide including at least Ni and Mn. Here, when the average atomic proportion of Ni present in the primary particle in which the first region and the second region coexist is a1, and the average atomic proportion of Mn therein is a3, the average atomic proportion (b1) of Ni in the first region may be a1 or less, and the average atomic proportion (b3) of Mn in the first region may be greater than a3.

Another aspect of the present invention provides a positive electrode slurry composition that includes the positive electrode active material defined herein, a conductive material and a binder.

Still another aspect of the present invention provides a lithium secondary battery that includes a positive electrode formed by coating a current collector with the positive electrode slurry composition defined herein.

### BRIEF DESCRIPTION OF THE DRAWINGS

The above and other objects, features and advantages of the present invention will become more apparent to those of ordinary skill in the art by describing in detail exemplary embodiments thereof with reference to the accompanying drawings, in which:
FIGS. 1 and 2 are schematic diagrams for illustrating a first region and a second region, which are present in a primary particle constituting a positive electrode active material according to one embodiment of the present invention;
FIG. 3 shows the cross-sectional TEM images and EDX mapping results for a positive electrode active material (secondary particle) according to Example 1 of the present invention;
FIG. 4 displays the locations at which Co concentrations in a primary particle are measured in the Co EDX mapping images shown in FIG. 3;
FIG. 5 shows the cross-sectional TEM images and EDX mapping results for a positive electrode active material (secondary particle) according to Example 3 of the present invention;
FIG. 6 displays the locations at which Mn concentrations in a primary particle are measured in the cross-sectional TEM images shown in FIG. 5;
FIG. 7 shows the cross-sectional TEM images and EDX mapping results for a positive electrode active material (secondary particle) according to Comparative Example 1; and
FIG. 8 shows the cross-sectional TEM images and EDX mapping results for a positive electrode active material (secondary particle) according to Comparative Example 2.

### DETAILED DESCRIPTION OF EXEMPLARY EMBODIMENTS

In order to better understand the present invention, certain terms are defined herein for convenience. Unless defined otherwise herein, scientific and technical terms used herein will have meanings commonly understood by those of ordinary skill in the art. In addition, unless specifically indicated otherwise, terms in a singular form also include plural forms, and terms in a plural form should be understood to include singular forms as well.

Hereinafter, a positive electrode active material according to the present invention and a lithium secondary battery including the positive electrode active material will be described in further detail.

### Positive electrode active material

According to one aspect of the present invention, a positive electrode active material that includes a primary particle capable of the reversible intercalation/deintercalation of lithium ions and a secondary particle in which the primary particles are aggregated is provided.

Here, the primary particle refers to a single particle. In addition, the primary particle may be one grain or crystallite. The primary particle may have a single crystal structure.

The secondary particle is an aggregate formed by aggregating a plurality of primary particles. In addition, the secondary particle may be referred to as a bulk or bulk particle.

As the average particle diameter of the primary particle may be in the range of 0.05 to 5 µm, and preferably, 0.1 to 3 µm, the optimal density of positive electrodes manufactured using positive electrode active materials according to various embodiments of the present invention may be realized. In addition, the average particle diameter of the secondary particle may vary depending on the number of aggregated primary particles, and may generally be, 3 to 20 µm.

The secondary particle may be divided into a central portion corresponding to a region relatively close to the very center of the secondary particle and a surface portion corresponding to a region close to the outer surface of the secondary particle.

When not separately defined herein, based on the average radius of the secondary particle, a region defined by a distance from the very center to half the average radius of the secondary particle may be referred to as a central portion, and a region defined by a distance from the outer surface to half the average radius of the secondary particle may be referred to as a surface portion.

A pore and/or grain boundary may be present between the primary particles constituting the secondary particle.

For example, inner pores may be formed inside the secondary particle by a primary particle being spaced apart from neighboring primary particles. Here, the inner pore may be a closed pore and/or an open pore.

In addition, a grain boundary of the primary particle may be defined as a boundary formed by a primary particle coming into contact with a neighboring primary particle. That is, the grain boundary is a boundary formed by neighboring primary particles coming into contact with each other, and may not be interpreted as being included in the primary particle. Accordingly, it may not be interpreted that there are a plurality of regions which have different metal oxides from those of the primary particles along the grain boundary, and a concentration change of an arbitrary transition metal in the primary particle even when the concentration of the transition metal in the metal oxide and the concentration of the transition metal in the primary particle are different.

Meanwhile, the surface, which is exposed to the outside, of the primary particle in the surface portion of the secondary particle forms the surface (outer surface) of the secondary particle.

Here, the primary particle is a lithium composite oxide including at least one selected from Ni, Co, Mn and Al as a transition metal.

Specifically, the lithium composite oxide may include Ni and Co, Ni and Mn, Ni and Al, Ni, Co and Mn, Ni, Co and Al, or Ni, Co, Mn and Al. In addition, the lithium composite oxide may include a doping metal in addition to the transition metal.

In one embodiment, the primary particle may be defined as a lithium composite oxide represented by Formula 1 below. In addition, the average composition of the secondary particle, which is an aggregate of lithium composite oxides represented by Formula 1 below, may also be represented by Formula 1 below.

[Formula 1] Li_{w}Ni_{1-(x+y+z)}CoₓM1_{y}M2_{z}O₂

Wherein,
M1 is at least one selected from Mn and Al,
M2 is at least one selected from Na, K, Mg, Ca, Ba, Mn, B, Ce, Hf, Ta, Cr, F, Al, Cr, V, Ti, Fe, Zr, Zn, Si, Y, Nb, Ga, Sn, Mo, W, P, Sr, Ge, Nd, Gd and Cu,
M1 and M2 are different,
0.5≤w≤1.5, 0≤x≤0.40, 0≤y≤0.40, and 0.001≤z≤0.30.)

The lithium composite oxide may further include a doping metal as well as the transition metal. The doping metal is denoted by M2 in Formula 1, and may be an alkali metal, an alkaline earth metal, and/or a metal element other than M1.

Meanwhile, the lithium composite oxide included in the positive electrode active material defined herein may be a high-Ni lithium composite oxide with a relatively high Ni content among the transition metals. In this case, the mole fraction of Ni in the lithium composite oxide represented by Formula 1 may be 60%, preferably, 70%, and more preferably, 80% or more.

As the positive electrode active material defined herein includes a primary particle in which a plurality of regions with different concentrations of an arbitrary transition metal are locally formed, the efficiency of lithium ion and/or charge diffusion may be improved. Accordingly, as the Ni content in the lithium composite oxide increases, it is possible to prevent or mitigate a phenomenon of increasing the resistance of the positive electrode active material.

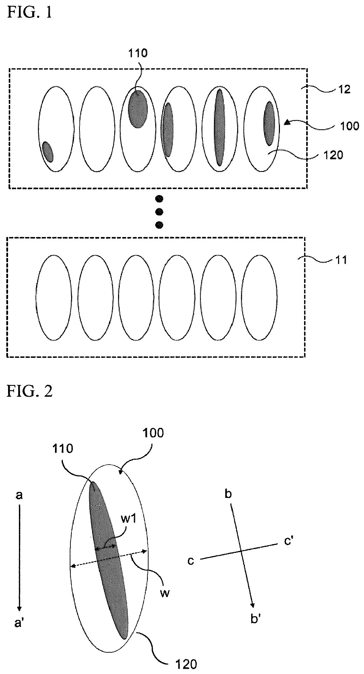

FIGS. 1 and 2 are schematic diagrams illustrating a first region and a second region, which are present in a primary particle constituting the positive electrode active material according to one embodiment of the present invention.

When the average atomic proportion of an arbitrary transition metal present in the primary particle 100 is a, the secondary particle may include a primary particle 100 in which a first region 110 in which the average atomic proportion of the arbitrary transition metal is greater than a, and a second region 120 in which the average atomic proportion of the arbitrary transition metal is equal to or less than a coexist.

That the secondary particle includes a primary particle 100 in which the first region 110 and the second region 120 coexist means that the secondary particle may include a primary particle 100 that does not include a concentration change region divided into the first region 110 and the second region 120.

Whether the first region 110 and the second region 120 are present in the primary particle 100 may be confirmed from a cross-sectional TEM image. In addition, it may also be confirmed by a variety of known means (e.g., EDX mapping, line scanning, Energy Profiling-Energy Dispersive X-Ray Spectroscopy (EP-EDS), etc.) for observing the change in concentration of an arbitrary transition metal in the primary particle, as well as the cross-sectional TEM image.

For example, in the case of EDX mapping for an arbitrary transition metal based on the cross-sectional TEM image of the secondary particle, since a detection intensity in the first region 110 having a relatively high concentration of the transition metal is strongly detected, it is possible to distinguish the first region 110 from the second region 120 in which the concentration of the transition metal is relatively low.

As described above, based on the cross-sectional TEM image of the secondary particle, at least one region selected from the first region 110 and the second region 120 is locally formed in the primary particle 100 in which the first region 110 and the second region 120 coexist, so a difference in lithium ion and/or charge diffusion between the first region 110 and the second region 120 may be realized. Such a difference in lithium ion and/or charge diffusion may contribute to the formation of a diffusion path for lithium ions and/or charges.

In addition, as at least one region selected from the first region 110 and the second region 120 is locally present in the primary particle 100, a buffering effect against the change in crystal structure during charging/discharging may be provided.

When the first region 110 is present in a region close to the surface of the primary particle 100, the first region 110 can be observed to be present at least in the surface portion of the primary particle 100 or inside the surface portion of the primary particle 100, and the first region 110 can be observed to not be present at a grain boundary formed by adjacent primary particles 100 coming into contact with each other.

That the first region 110 and/or the second region 120 are locally present in the primary particle 100 means that an arbitrary transition metal does not exhibit a gradient in the entire primary particle 100.

For example, when a gradient in which the concentration of an arbitrary transition metal continuously decreases from the surface portion 12 to the central portion 11 of the secondary particle is formed, and particularly, there is only a gradient in which the concentration of the transition metal continuously decreases along the direction from the surface portion 12 to the central portion 11 of the secondary particle in the primary particle 100 present in the surface portion 12 and the central portion 11 of the secondary particle, and particularly, in the surface portion 12 of the secondary particle, it cannot be considered that the first region 110 and/or the second region 120 are locally present in the primary particle 100.

In addition, even when a gradient in which the concentration of an arbitrary transition metal continuously decreases from the surface portion to the central portion of the primary particle 100 is formed, the first region 110 and/or the second region 120 may not be locally present in the primary particle 100.

Meanwhile, in order to form the above-described gradient of the concentration of an arbitrary transition metal in a direction from the surface portion to the central portion of the primary particle and/or secondary particle, generally, a gradient solid-solution of the arbitrary transition metal should be induced through a coating process for a precursor and/or a lithium composite oxide.

However, through the gradient solid-solution, the first region 110 and/or the second region 120 in the primary particle 100 may not be locally present. For example, for the positive electrode active material according to the present invention, the first region 110 and/or the second region 120 may be allowed to be locally present in the primary particle 100 by using a precursor designed in consideration of the difference in diffusion rate of major transition metals during thermal treatment performed in the preparation process.

Accordingly, unlike the common gradient solid-solution for the primary particle and/or the secondary particle, the positive electrode active material defined herein may be prepared so that a plurality of at least one region selected from the first region 110 and the second region 120, and particularly, the first region 110, can be present in the primary particle 100 in which the first region 110 and the second region 120 coexist based on the cross-sectional TEM image of the secondary particle.

As there are a plurality of the first regions 110 and/or the second regions 120 in the primary particle 100, lithium ion and/or charge diffusion paths caused by the difference in lithium ion and/or charge diffusion between the first region 110 and the second region 120 may be formed in various directions.

In one embodiment, based on the cross-sectional TEM image of the secondary particle, at least one region selected from the first region 110 and the second region 120, and particularly, the first region 110, may extend along in the primary particle 100 in which the first region 110 and the second region 120 coexist in a direction from the surface 12 to the center 11 of the secondary particle.

Here, the expression "extending in a direction from the surface 12 to the center 11 of the secondary particle" may mean extending in a direction exactly corresponding to the direction from the surface 12 to the center 11 of the secondary particle.

Alternatively, the expression "extending in a direction from the surface 12 to the center 11 of the secondary particle" may mean extending in a direction not deviating significantly from the direction from the surface 12 to the center 11 of the secondary particle. In this case, as shown in FIG. 2, there may be a predetermined angle of intersection (e.g., ±40°) between the extension direction of the first region 110 and the direction from the surface 12 to the center 11 of the secondary particle.

The extension direction of the long side of the primary particle 100 shown in FIG. 2 is oriented along the direction (a→a') from the surface 12 to the center 11 of the secondary particle. Here, unlike the example shown in FIG. 2, in the primary particle 100, the direction in which the long side of the primary particle 100 extends from the surface 12 to the center 11 of the secondary particle of the secondary particle may be oriented to form a predetermined angle of intersection (e.g., ±40°).

FIG. 2 shows the example in which the first region 110 locally present in the primary particle 100 extends along the direction (b→b') that forms a predetermined angle of intersection (e.g., ±40°) with the direction (a→a') from the surface 12 to the center 11 of the secondary particle.

Here, when a length measured along the direction (c→c') perpendicular to the extension direction (b→b') of the first region 110 in the primary particle 100 is defined as the width w of the primary particle 100, the width w1 of the first region may be smaller than the width w of the primary particle 100. More specifically, the average value of the width w of the primary particle 100 measured along the direction (c→c') perpendicular to the extension direction (b→b') of the first region 110 in the section having the first region 110 may be larger than that of the width w1 of the first region.

In addition, based on the cross-sectional TEM image of the secondary particle, the proportion of the primary particles 100 in which the first region 110 and the second region 120 coexist among all primary particles in the surface portion 12 of the secondary particle may larger than that of the primary particles 100 in which the first region 110 and the second region 120 coexist among all primary particles in the central portion 11 of the secondary particle.

In another example, based on the based on the cross-sectional TEM image of the secondary particle, the primary particle 100 in which the first region 110 and the second region 120 coexist may be locally present in the surface portion 12 of the secondary particle.

Likewise, as the primary particle 100 in which the first region 110 and the second region 120 coexist is mainly present in the surface portion 12 of the secondary particle, it is possible to improve the electrochemical properties of a high-Ni lithium composite oxide, such as insufficient diffusion of lithium ions and/or charges on the surface of the secondary particle. When the primary particle 100 in which the first region 110 and the second region 120 coexist is mainly present in the central portion 11 of the secondary particle, or uniformly present in the central portion 11 and the surface portion 12 of the secondary particle, it may be difficult to realize a sufficient lithium ion exchange effect inside the secondary particle.

In one embodiment, the primary particle 100 may be a lithium composite oxide including at least Ni and Co.

Here, in the primary particle 100 in which the first region 110 and the second region 120 coexist, when the average atomic proportion of Ni is a1, and the average atomic proportion of Co is a2, the average atomic proportion b1 of Ni in the first region is a1 or less, and the average atomic proportion b2 of Co in the first region may be larger than a2.

On the contrary, the average atomic proportion b1 of Ni in the second region 120 may be larger than a1, and the average atomic proportion b2 of Co in the second region 120 may be a2 or less.

When the primary particle 100 is a lithium composite oxide further including Mn, and the average atomic proportion of Mn in the primary particle is a3, the average atomic proportions b3 of Mn in the first region 110 and the second region 120 may be almost similar to a3, or a deviation less than the concentration deviations of Ni and/or Co in the first region 110 and the second region 120 may be shown.

In another embodiment, the primary particle 100 may be a lithium composite oxide including at least Ni and Mn.

Here, in the primary particle 100 in which the first region 110 and the second region 120 coexist, when the average atomic proportion of Ni is a1 and the average atomic proportion of Mn is a3, the average atomic proportion b1 of Ni in the first region 110 may be a1 or less, and the average atomic proportion b3 of Mn in the first region 110 may be larger than a3.

On the contrary, the average atomic proportion bv1 of Ni in the second region 120 may be larger than a1, and the average atomic proportion b3 of Mn in the second region 120 may be a3 or less.

When the primary particle 100 is a lithium composite oxide further including Co, and the average atomic proportion of Co in the primary particle is a2, the average atomic proportions b2 of Co in the first region 110 and the second region 120 may be almost similar to a2, or a deviation less than the concentration deviations of Ni and/or Co in the first region 110 and the second region 120 may be shown. In another example, in the primary particle 100, Co may show a pattern of concentration variation similar to that of Ni, and therefore, the average atomic proportion b2 of Co in the first region 110 may be a2 or less, and the average atomic proportion b2 of Co in the second region 120 may be larger than a2.

In addition, the positive electrode active material defined herein may include a coating layer that covers at least a part of the surface of the primary particle and/or the secondary particle. The surface of the primary particle may refer to a grain boundary defined by adjacent primary particles coming into contact with each other.

For example, the coating layer may be present to cover at least a part of the exposed surface of the primary particle. Particularly, the coating layer may be present to cover at least a part of the exposed surface of the primary particle present at the outermost part of the secondary particle.

Accordingly, the coating layer may be continuously or discontinuously present as a layer for coating the surface of the primary particle and/or the secondary particle. When the coating layer is discontinuous, it may be present in the form of an island.

The coating layer for covering the surface of the primary particle and/or the secondary particle may contribute to an improvement in the electrochemical properties of a high-Ni lithium composite oxide, such as insufficient diffusion of lithium ions and/or charges. In addition, the diffusion of lithium ions and/or charges may be promoted toward the lithium ion and/or charge diffusion path formed by the primary particle 100 in which the first region 110 and the second region 120 coexist, which is present close to the surface of the secondary particle.

In addition, the coating layer may also be present in the form of a solid solution, which does not form a boundary with the primary particle and/or the secondary particle formed by aggregating the primary particles.

The coating layer may include at least one oxide represented by Formula 2 below. That is, the coating layer may be defined as a region in which an oxide represented by Formula 2 below is present.

[Formula 2] LiₐA_{b}O_{c}

Wherein,
A is at least one selected from Ni, Mn, Co, Fe, Cu, Nb, Mo, Ti, Al, Cr, Zr, Zn, Na, K, Ca, Mg, Pt, Au, B, P, Eu, Sm, W, V, Ba, Ta, Sn, Hf, Ce, Gd and Nd,
0≤a≤10, 0≤b≤8, and 2≤c≤13.)

In addition, the coating layer may have different types of oxides together in one layer, or have different types of oxides represented by Formula 2 in separate layers.

Such an oxide represented by Formula 2 may be physically and/or chemically bonded with a primary particle represented by Formula 1. In addition, the oxide may be present while forming a solid solution with the primary particle represented by Formula 1.

The positive electrode active material according to the embodiment may have increased structural stability by including a coating layer that covers at least a part of the surfaces of the primary particle (e.g., the interface between the primary particles) and/or a secondary particle formed by aggregating the primary particles. In addition, when such a positive electrode active material is used in a lithium secondary battery, the high temperature storage stability and lifetime characteristics of the positive electrode active material may be improved. In addition, the oxide reduces residual lithium in the positive electrode active material and at the same time acts as a diffusion pathway for lithium ions, thereby having an effect of improving the efficiency characteristics of a lithium secondary battery.

In addition, in some cases, the oxide may not only be present on at least a part of the surface of the primary particle and/or the secondary particle, but also in inner pores formed inside the secondary particle.

The oxide may be an oxide in which lithium is complexed with an element denoted by A, or oxides of A, and may be, for example, LiₐCo_{b}O_{c}, LiₐW_{b}O_{c}, LiₐZr_{b}O_{c}, LiₐTi_{b}O_{c}, LiₐNi_{b}O_{c}, LiₐB_{b}O_{c}, Co_{b}O_{c}, W_{b}O_{c}, Zr_{b}O_{c}, Ti_{b}O_{c} or B_{b}O_{c}. The above examples are merely provided for convenience to help understanding, and the oxides defined herein are not limited thereto.

In another embodiment, the oxide may be an oxide in which lithium is complexed with at least two types of elements denoted by A, or may further include an oxide in which lithium is complexed with at least two types of elements denoted by A. The oxide in which lithium is complexed with at least two types of elements denoted by A may be, for example, Liₐ(Co/Al)_{b}O_{c}, Liₐ(Co/Mg)_{b}O_{c}, Liₐ(Co/Ba)_{b}O_{c}, Liₐ(W/Ti)_{b}O_{c}, Liₐ(W/Zr)_{b}O_{c}, Liₐ(W/Ti/Zr)_{b}O_{c}, or Liₐ(W/Ti/B)_{b}O_{c}, but the present invention is not necessarily limited thereto.

Here, the oxide may exhibit a concentration gradient that decreases from the surface portion to the central portion of the secondary particle. Accordingly, the concentration of the oxide may decrease from the outermost surface to the central portion of the secondary particle.

Here, as the oxide is diffused along a grain boundary formed by the primary particles from the surface portion to the central portion of the secondary particle, the concentration gradient of the oxide may be formed.

As described above, as the oxide exhibits a concentration gradient that decreases from the surface portion to the central portion of the secondary particle, side reactions caused by unreacted residual lithium may be prevented in advance by effectively reducing residual lithium present on the surface of the positive electrode active material. In addition, it is possible to prevent the oxide from lowering the crystallinity of the inner surface region of the positive electrode active material. In addition, it is possible to prevent the entire structure of the positive electrode active material from collapsing due to the oxide during an electrochemical reaction.

In addition, the coating layer may include a first oxide layer including at least one oxide represented by Formula 2 and a second oxide layer including at least one oxide represented by Formula 2, which is different from that of the first oxide layer.

For example, the first oxide layer may be present to cover at least a part of the exposed surface of the primary particle present at the outermost part of the secondary particle, and the second oxide layer may be present to cover at least a part of the exposed surface of the primary particle, which is not covered by the first oxide layer, and the surface of the first oxide layer.

### Lithium secondary battery

According to another aspect of the present invention, a positive electrode including a positive electrode current collector and a positive electrode active material layer formed on the positive electrode current collector may be provided. Here, the positive electrode active material layer may include the above-described positive electrode active material prepared by a preparation method according to various embodiments of the present invention as a positive electrode active material.

Accordingly, since the positive electrode active material is the same as described above, a detailed description will be omitted for convenience. Therefore, only the remaining components not described above will be described below.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may typically have a thickness of 3 to 500 µm, and fine irregularities may be formed on the surface of the current collector, thereby increasing the adhesive strength of a positive electrode active material. For example, the positive electrode current collector may be used in various forms such as a film, a sheet, a foil, a net, a porous body, foam, a non-woven fabric, etc.

The positive electrode active material layer may be prepared by coating the positive electrode current collector with a positive electrode slurry composition including the positive electrode active material, a conductive material, and a binder included optionally as needed.

Here, the positive electrode active material is included at 80 to 99 wt%, and specifically, 85 to 98.5 wt% with respect to the total weight of the positive electrode active material layer. When the positive electrode active material is included in the above content range, excellent capacity characteristics may be exhibited, but the present invention is not limited thereto.

The conductive material is used to impart conductivity to an electrode, and is not particularly limited as long as it has electron conductivity without causing a chemical change in a battery. A specific example of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be generally contained at 0.1 to 15 wt% with respect to the total weight of the positive electrode active material layer.

The binder serves to improve attachment between particles of the positive electrode active material and the adhesive strength between the positive electrode active material and a current collector. A specific example of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), fluorine rubber, or various copolymers thereof, and one or a mixture of two or more thereof may be used. The binder may be included at 0.1 to 15 wt% with respect to the total weight of the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material and the binder and then imparting a viscosity for exhibiting excellent thickness uniformity when the slurry is applied to manufacture a positive electrode.

In addition, in another exemplary embodiment, the positive electrode may be manufactured by casting the positive electrode slurry composition on a separate support, and laminating a film obtained by delamination from the support on the positive electrode current collector.

Still another aspect of the present invention provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator and an electrolyte, which are interposed between the positive electrode and the negative electrode. Here, since the positive electrode is the same as described above, for convenience, detailed description for the positive electrode will be omitted, and other components which have not been described below will be described in detail.

The lithium secondary battery may further include a battery case accommodating an electrode assembly of the positive electrode, the negative electrode and the separator, and optionally, a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminum-cadmium alloy. In addition, the negative electrode current collector may generally have a thickness of 3 to 500 µm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, foam, a non-woven fabric, etc.

The negative electrode active material layer may be formed by coating the negative electrode current collector with a negative electrode slurry composition including the negative electrode active material, a conductive material, and a binder optionally included as needed.

As the negative electrode active material, a compound enabling the reversible intercalation and deintercalation of lithium may be used. A specific example of the negative electrode active material may be a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, a Si alloy, a Sn alloy or an Al alloy; a metal oxide capable of doping and dedoping lithium such as SiO_{β} (0<β<2), SnO₂, vanadium oxide, or lithium vanadium oxide; or a composite including the metallic compound and the carbonaceous material such as a Si-C composite or a Sn-C composite, and any one or a mixture of two or more thereof may be used. In addition, as the negative electrode active material, a metal lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included at 80 to 99 wt% with respect to the total weight of the negative electrode active material layer.

The binder is a component aiding bonding between a conductive material, an active material and a current collector, and may be generally added at 0.1 to 10 wt% with respect to the total weight of the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber, nitrile-butadiene rubber, fluorine rubber, and various copolymers thereof.

The conductive material is a component for further improving conductivity of the negative electrode active material, and may be added at 10 wt% or less, and preferably, 5 wt% or less with respect to the total weight of the negative electrode active material layer. The conductive material is not particularly limited as long as it does not cause a chemical change in the battery, and has conductivity, and may be, for example, graphite such as natural graphite or artificial graphite; carbon black such as acetylene black, Ketjen black, channel black, furnace black, lamp black or thermal black; a conductive fiber such as a carbon fiber or a metal fiber; a metal powder such as fluorinated carbon, aluminum, or nickel powder; a conductive whisker such as zinc oxide or potassium titanate; a conductive metal oxide such as titanium oxide; or a conductive material such as a polyphenylene derivative.

In an exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

Meanwhile, in the lithium secondary battery, a separator is not particularly limited as long as it is generally used in a lithium secondary battery to separate a negative electrode from a positive electrode and provide a diffusion path for lithium ions, and particularly, the separator has a low resistance to ion mobility of an electrolyte and an excellent electrolyte wettability. Specifically, a porous polymer film, for example, a porous polymer film prepared of a polyolefin-based polymer such as an ethylene homopolymer, a propylene homopolymer, an ethylene/butene copolymer, an ethylene/hexene copolymer and an ethylene/methacrylate copolymer, or a stacked structure including two or more layers thereof may be used. In addition, a conventional porous non-woven fabric, for example, a non-woven fabric formed of a high melting point glass fiber or a polyethylene terephthalate fiber may be used. In addition, a coated separator including a ceramic component or a polymer material may be used to ensure thermal resistance or mechanical strength, and may be optionally used in a single- or multi-layered structure.

In addition, the electrolyte used in the present invention may be an organic liquid electrolyte, an inorganic liquid electrolyte, a solid polymer electrolyte, a gel-type polymer electrolyte, a solid inorganic electrolyte, or a molten-type inorganic electrolyte, which is able to be used in the production of a lithium secondary battery, but the present invention is not limited thereto.

Specifically, the electrolyte may include an organic solvent and a lithium salt.

The organic solvent is not particularly limited as long as it can serve as a medium enabling the transfer of ions involved in an electrochemical reaction of a battery. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C2 to C20 hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferably used, and a mixture of a cyclic carbonate (for example, ethylene carbonate or propylene carbonate) having high ion conductivity and high permittivity to increase the charge/discharge performance of a battery and a low-viscosity linear carbonate-based compound (for example, ethyl methyl carbonate, dimethyl carbonate or diethyl carbonate) is more preferably used. In this case, by using a mixture of a cyclic carbonate and a chain-type carbonate in a volume ratio of approximately 1:1 to 1:9, the electrolyte may exhibit excellent performance.

The lithium salt is not particularly limited as long as it is a compound capable of providing a lithium ion used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt is preferably in the range of 0.1 to 2.0M. When the concentration of the lithium salt is included in the above-mentioned range, the electrolyte has suitable conductivity and viscosity and thus can exhibit excellent electrolytic performance. Therefore, lithium ions can effectively diffuse.

To enhance lifetime characteristics of the battery, inhibit a decrease in battery capacity, and enhance discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. Here, the additive(s) may be included at 0.1 to 5 wt% with respect to the total weight of the electrolyte.

Since the lithium secondary battery including the positive electrode active material according to the present invention stably exhibits excellent discharge capacity, excellent output characteristics and excellent lifespan characteristics, it is useful in portable devices such as a mobile phone, a notebook computer and a digital camera and an electric vehicle field such as a hybrid electric vehicle (HEV).

The outer shape of the lithium secondary battery according to the present invention is not particularly limited, but may be a cylindrical, prismatic, pouch or coin type using a can. In addition, the lithium secondary battery may be used in a battery cell that is not only used as a power source of a small device, but also preferably used as a unit battery for a medium-to-large battery module including a plurality of battery cells.

According to still another exemplary embodiment of the present invention, a battery module including the lithium secondary battery as a unit cell and/or a battery pack including the same is provided.

The battery module or the battery pack may be used as a power source of any one or more medium-to-large devices including a power tool; an electric motor vehicle such as an electric vehicle (EV), a hybrid electric vehicle, and a plug-in hybrid electric vehicle (PHEV); and a power storage system.

Hereinafter, the present invention will be described in further detail with reference to examples. However, these examples are merely provided to exemplify the present invention, and thus the scope of the present invention will not be construed not to be limited by these examples.

### Preparation Example 1. Preparation of positive electrode active material in which Co-localized region is present in primary particle

### (1) Example 1

(a) A hydroxide precursor in which Co is present at a high concentration on a surface portion was synthesized through a known co-precipitation method.
   Specifically, a core having an average composition of Ni_{0.90}Co_{0.02}Mn_{0.08}(OH)₂ was formed using a first precursor aqueous solution in which nickel sulfate, cobalt sulfate and manganese sulfate were mixed such that a molar ratio of Ni:Co:Mn became 90:2:8. The core was formed to have a diameter 88 to 98% of the average diameter of the finally obtained precursor.
   After completing the formation of the core, by using a second precursor aqueous solution in which nickel sulfate, cobalt sulfate and manganese sulfate were mixed such that a molar ratio of Ni:Co:Mn became 55:43.5:1.5, a shell having an average composition of Ni_{0.55}Co_{0.435}Mn_{0.015}(OH)₂ was formed on the surface of the core.
(b) After the hydroxide precursor synthesized in (a) was mixed with LiOH (Li/(Ni+Co+Mn) mol ratio = 1.03), the temperature of a calciantion furnace was raised to 700 °C at a rate of 2 °C per minute while maintaining an O₂ atmosphere, and thermal treatment was performed on the mixture at 700 °C for 10 hours, thereby obtaining a positive electrode active material.

A lithium composite oxide included in the positive electrode active material obtained in (b) has a primary particle in which regions with different Co concentrations are locally formed.

### (2) Example 2

A positive electrode active material was prepared in the same manner as in Example 1, except that, after (b), the lithium composite oxide was mixed with 0.3 mol% Al₂O₃, 0.3 mol% TiO₂ and 0.3 mol% ZrO₂, and then the temperature of a calcination furnace was raised to 700 °C at a rate of 2 °C per minute while maintaining an O₂ atmosphere, and thermal treatment was performed on the mixture at 700 °C for 10 hours to coat the surface of the lithium composite oxide with Al, Ti and Zr.

### (3) Comparative Example 1

A positive electrode active material was prepared in the same manner as in Example 1, except that a shell was not formed on the surface of a core using a second precursor aqueous solution.

### Preparation Example 2. Preparation of positive electrode active material in which Mn-localized region is present in primary particle

### (1) Example 3

(a) A hydroxide precursor in which Mn is present at a high concentration in a surface portion was synthesized through a known co-precipitation method.
   Specifically, a core having an average composition of Ni_{0.90}Co_{0.08}Mn_{0.02}(OH)₂ was formed using a first precursor aqueous solution in which nickel sulfate, cobalt sulfate and manganese sulfate were mixed such that a molar ratio of Ni:Co:Mn became 90:8:2. The core was formed to have a diameter 85 to 98% of the average diameter of the finally obtained precursor.
   After completing the formation of the core, by using a second precursor aqueous solution in which nickel sulfate, cobalt sulfate and manganese sulfate were mixed such that a molar ratio of Ni:Co:Mn became 55:1.5:43.5, a shell having an average composition of Ni_{0.55}Co_{0.015}Mn_{0.435}(OH)₂ was formed on the surface of the core.
(b) After the hydroxide precursor synthesized in (a) was mixed with LiOH (Li/(Ni+Co+Mn) mol ratio = 1.03), the temperature of a calcination furnace was raised to 700 °C at a rate of 2 °C per minute while maintaining an O₂ atmosphere, and thermal treatment was performed on the mixture at 700 °C for 10 hours, thereby obtaining a positive electrode active material.

A lithium composite oxide included in the positive electrode active material obtained in (b) has a primary particle in which regions with different Mn concentrations are locally formed.

### (2) Example 4

A positive electrode active material was prepared in the same manner as in Example 3, except that, after (b), the lithium composite oxide was mixed with 0.3 mol% Al₂O₃, 0.3 mol% TiO₂ and 0.3 mol% ZrO₂, and then the temperature of a calcination furnace was raised to 700 °C at a rate of 2 °C per minute while maintaining an O₂ atmosphere, and thermal treatment was performed on the mixture at 700 °C for 10 hours to coat the surface of the lithium composite oxide with Al, Ti and Zr.

### (3) Comparative Example 2

A positive electrode active material was prepared in the same manner as in Example 3, except that a shell was not formed on the surface of a core using a second precursor aqueous solution.

### Preparation Example 3. Manufacture of lithium secondary battery

A positive electrode slurry was prepared by dispersing 92 wt% of each of the positive electrode active materials prepared according to Preparation Example 1, 4 wt% of artificial graphite and 4 wt% of a PVDF binder in 30 g of N-methyl-2-pyrrolidone (NMP). The positive electrode slurry was uniformly applied to an aluminum (Al) thin film having a thickness of 15 µm and dried in vacuo at 135 °C, thereby manufacturing a positive electrode for a lithium secondary battery.

The positive electrode, lithium foil as a counter electrode, and a porous polyethylene film (Celgard 2300, thickness: 25 µm) as a separator, and an electrolyte prepared by adding LiPF₆ at 1.15M in a solvent in which ethylene carbonate and ethyl methyl carbonate were mixed in a volume ratio of 3:7 were used to manufacture a coin cell.

### Experimental Example 1. EDX mapping analysis of positive electrode active material

After cross-sectioning each of the positive electrode active materials (secondary particles) according to Example 1, Example 3, Comparative Example 1 and Comparative Example 2 using FIB (Ga-ion source), a cross-sectional TEM image was obtained. Subsequently, the distribution of Ni, Co and Mn in a primary particle was confirmed through Ni, Co and Mn EDX mapping for the cross-sectional TEM image.

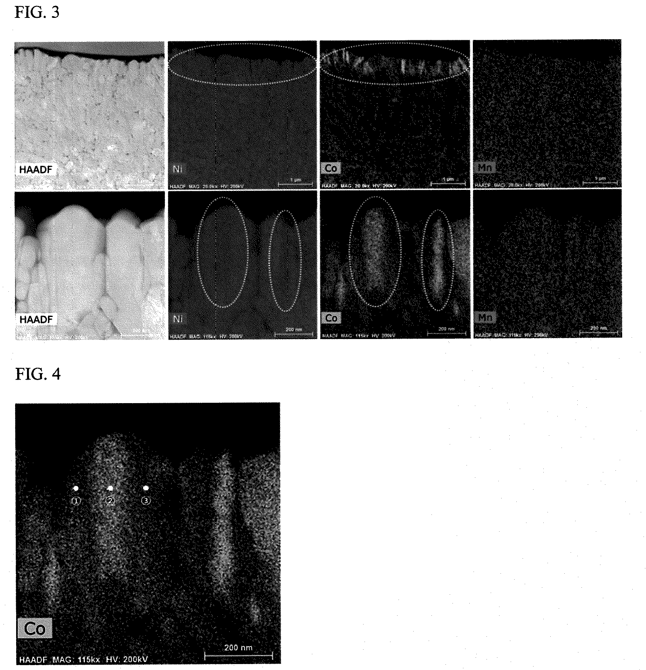

Referring to FIGS. 3 and 4 for the positive electrode active material according to Example 1, it can be confirmed that there are regions with variations in concentrations of Ni and Co in a primary particle.

For example, based on FIG. 4, there is a relatively bright region in the primary particle, and the region corresponds to a region with a higher density of Co compared to other regions. In the region with a high density of Co, the average atomic proportion (b2) of Co may be larger than that (a2) of Co in the primary particle.

Here, when the region with a higher density of Co compared to other regions is defined as a first region, and the region other than the first region is defined as a second region, the average atomic proportion of Ni present in the primary particle in which the first region and the second region coexist is a1, and the average atomic proportion of Co is a2, the average atomic proportion (b1) of Ni in the first region may be al or less, and the average atomic proportion (b2) of Co in the first region may be larger than a2. On the other hand, it can be confirmed that the localization of Mn in the primary particle in which the first region and the second region coexist is insignificant compared to Ni and Co.

In addition, referring to FIG. 3, based on the cross-sectional TEM image, it can be confirmed that at least one region selected from the first and second regions in the primary particle in which the first and second regions coexist is locally present in the primary particle. In addition, in some primary particles, it can be confirmed that at least one region selected from the first region and the second region is present in a plurality in the primary particle.

Particularly, based on the cross-sectional TEM image of the secondary particle, it can be confirmed that the primary particle in which the first and second regions coexist is locally present in the surface portion of the secondary particle. As the primary particle in which the first region and the second region coexist is locally present in the surface portion of the secondary particle, stability in the surface portion of the secondary particle where most side reactions occur may be improved.

Referring to FIG. 4 showing the Co EDX mapping image of FIG. 3, it can be confirmed that at least one selected from the first and second regions in the primary particle in which the first and second regions coexist extends along a direction from the surface to center of the secondary particle, and when a length measured along the direction perpendicular to the extension direction of the first region in the primary particle is the width of the primary particle, the width of the first region is smaller than that of the primary particle.

As the above-described type of concentration variation region is formed in the primary particle, it is possible to improve not only the electrochemical properties of a high-Ni lithium composite oxide, such as insufficient lithium ion and/or charge diffusion on the surface of the secondary particle, but also the stability of the crystal structure of the primary particle.

In Table 1 below, the results of measuring the average atomic proportions of Ni and Co in a primary particle and atomic proportions of Ni and Co at the locations displayed in FIG. 4 are shown.

**[Table 1]**

| Classification | Average atomic proportion in primary particle | ① | ② | ③ |
|---|---|---|---|---|
| Ni (at%) | 80.1 | 81.1 | 71.6 | 81.4 |
| Co (at%) | 17.8 | 17.2 | 26.0 | 16.0 |

That is, from the results of FIGS. 3 and 4 and Table 1, it can be confirmed that a concentration variation region with a relatively high Co concentration is locally present in the primary particle.

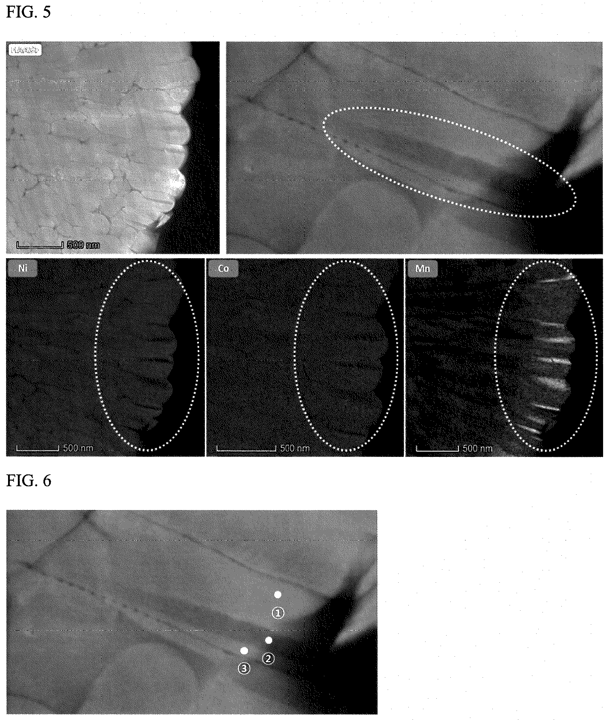

Likewise, referring to FIGS. 5 and 6 for the positive electrode active material according to Example 3, it can be confirmed that there are concentration variation regions for Ni and Mn in a primary particle.

For example, based on the result of EDX mapping for Mn in FIG. 5, there is a relatively bright region in a primary particle, and the region corresponds to a region with a higher density of Mn compared to other regions. The average atomic proportion (b3) of Mn in the region with a high density of Mn is larger than the average atomic proportion a3 of Mn in a primary particle.

Here, when the region with a higher density of Mn compared to other regions is defined as a first region, and a region other than the first region is defined as a second region, the average atomic proportion of Ni present in the primary particle in which the first and second regions coexist is a1, and the average atomic proportion of Mn therein is a3, the average atomic proportion (b1) of Ni in the first region may be a1 or less, and the average atomic proportion (b3) of Mn in the first region may be larger than a3.

It can be confirmed that the localization of Co in the primary particle in which the first and second regions coexist is expressed in a form similar to Ni.

In addition, referring to FIG. 5, like Example 1, it can be confirmed that the first region and/or the second region are locally present in the primary particle, and a plurality of the first regions and/or second regions are present in some primary particles. In addition, it can be confirmed that the shape of the concentration variation region is formed similarly to Example 1.

In Table 2 below, the results of the average atomic proportions of Ni and Mn in a primary particle and the atomic proportions of Ni and Mn at the locations displayed in FIG. 6 are shown.

**[Table 2]**

| Classification | Average atomic proportion in primary particle | ① | ② | ③ |
|---|---|---|---|---|
| Ni (at%) | 70.1 | 74.7 | 45.2 | 77.9 |
| Mn (at%) | 17.9 | 11.1 | 51.0 | 8.1 |

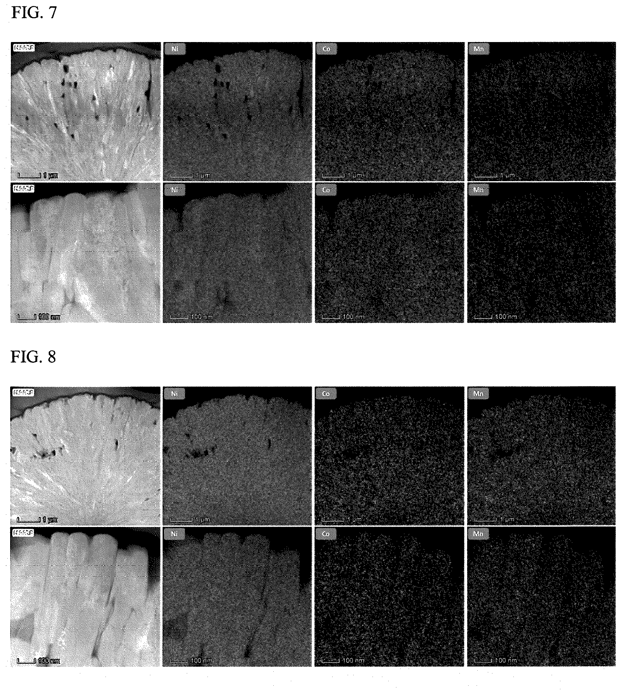

Meanwhile, referring to FIGS. 7 and 8 for the positive electrode active materials according to Comparative Examples 1 and 2, it can be confirmed that the localization phenomenon of an arbitrary transition metal element in a primary particle, that is, the concentration variation region, in a primary particle is not present.

In addition, although not separately attached, it can be also confirmed that the positive electrode active materials according to Examples 2 and 4 subjected to the surface coating treatment for the positive electrode active materials according to Examples 1 and 3 also formed a concentration variation region in a primary particle in a form similar to Examples 1 and 3, besides the surface coating and the gradient of a coating element caused thereby.

### Experimental Example 2. Evaluation of electrochemical properties of lithium secondary battery

Charging/discharging experiments were performed on each of the lithium secondary batteries (coin cells) manufactured in Preparation Example 2 using an electrochemical analyzer (Toyo, Toscat-3100) at 25 °C under conditions of a voltage range of 3.0V to 4.25V and a discharge rate of 0.2C to measure charge and discharge capacities.

In addition, the same lithium secondary battery was charged/discharged for 50 cycles at 25 °C in an operating voltage range of 3.0V to 4.25V under a condition of 1C/1C, and a rate of discharge capacity at the 50^{th} cycle of discharge relative to initial capacity (capacity retention) was then measured.

The measurement result is shown in Table 3 below.

**[Table 3]**

| Classification | | Charge capacity (mAh/g) | Discharge capacity (mAh/g) | Charge/discha rge efficiency (%) | Lifetime retention @50cy (%) |
|---|---|---|---|---|---|
| Preparation Example 1 | Example 1 | 240.3 | 225.5 | 93.8 | 89.2 |
| | Example 2 | 240.5 | 226.0 | 94.0 | 89.9 |
| | Comparative Example 1 | 227.3 | 208.1 | 91.6 | 80.8 |
| Preparation Example 2 | Example 3 | 232.1 | 218.2 | 94.0 | 86.8 |
| | Example 4 | 232.4 | 218.9 | 94.2 | 87.5 |
| | Comparative Example 2 | 219.2 | 201.2 | 91.8 | 79.5 |

Referring to the results of Table 3, referring to Example 1, Example 2 and Comparative Example 1 using a precursor in which a shell is formed with an average composition of Ni_{0.55}Co_{0.435}Mn_{0.015}(OH)₂ on the surface of a core with an average composition of Ni_{0.90}Co_{0.02}Mn_{0.08}(OH)₂, it can be confirmed that the capacity, charge/discharge efficiency, and lifetime retention of Example 1 and Example 2 are superior to those of Comparative Example 1 not having a Co localization phenomenon in a primary particle, that is, the Co concentration variation region in a primary particle.

Likewise, referring to Example 3, Example 4 and Comparative Example 2 using a precursor in which a shell is formed with an average composition of Ni_{0.55}CO_{0.015}Mn_{0.435}(OH)₂ on the surface of a core with an average composition of Ni_{0.90}Co_{0.08}Mn_{0.02}(OH)₂, it can be confirmed that the capacity, charge/discharge efficiency and lifetime retention of Example 3 and Example 4 are superior to those of Comparative Example 2 without the Mn localization phenomenon in a primary particle.

From the above results, it can be confirmed that it is possible to improve the capacity and charge/discharge efficiency of a lithium secondary battery using a positive electrode active material when regions with different concentrations of an arbitrary transition metal are locally formed in a primary particle.

In addition, it is expected that the increase in lifetime retention of a lithium secondary battery using the positive electrode active material is due to the mitigation of a decrease in stability of the crystal structure of a lithium composite oxide due to repeated charging/discharging by locally forming regions with different concentrations of an arbitrary transition metal in a primary particle.

### Experimental Example 3. Evaluation of Electrochemical Impedance Spectroscopy (EIS) characteristic of lithium secondary battery

After charging the lithium secondary battery (coin cell) manufactured in Preparation Example 2 under the condition of 1C, resistance was measured within a frequency range of 10 kHz to 0.01 Hz using Electrochemical Impedance Spectroscopy (EIS).

In the Nyquist plot obtained from the resistance measurement according to the impedance spectroscopy, a charge transfer resistance (R_{ct}) value after the 50^{th} cycle is shown in Table 4 below.

**[Table 4]**

| Classification | | R_{ct} (ohm) |
|---|---|---|
| Preparation Example 1 | Example 1 | 8.5 |
| | Example 2 | 7.9 |
| | Comparative Example 1 | 10.1 |
| Preparation Example 2 | Example 3 | 15.8 |
| | Example 4 | 13.6 |
| | Comparative Example 2 | 16.4 |

According to the results of Table 4, referring to Example 1, Example 2 and Comparative Example 1 using a precursor in which a shell is formed with an average composition of Ni_{0.55}Co_{0.435}Mn_{0.015}(OH)₂ on the surface of a core with an average composition of Ni_{0.90}Co_{0.02}Mn_{0.08}(OH)₂, it can be confirmed that the impedance characteristics of Example 1 and Example 2 are superior to that of Comparative Example 1 not having a Co localization phenomenon in a primary particle, that is, a Co concentration variation region in a primary particle.

Likewise, referring to Example 3, Example 4 and Comparative Example 2 using a precursor in which a shell is formed with an average composition of Ni_{0.55}Co_{0.015}Mn_{0.435}(OH)₂ on the surface of a core with an average composition of Ni_{0.90}Co_{0.08}Mn_{0.02}(OH)₂, it can be confirmed that the impedance characteristics of Example 3 and Example 4 are superior to that of Comparative Example 2 not having an Mn localization phenomenon in a primary particle.

From the results, it can be confirmed that, when regions with different concentrations of an arbitrary transition metal are locally formed in a primary particle, it is possible to prevent or mitigate a resistance-increasing phenomenon due to the increase in Ni content among the main transition metals constituting a lithium composite oxide.

According to the present invention, regions with different concentrations of an arbitrary transition metal can be locally formed in a primary particle constituting a positive electrode active material, thereby improving the efficiency of lithium ion and/or charge diffusion. Such improvement in efficiency of lithium ion and/or charge diffusion can contribute to improvement of the electrochemical properties of a lithium secondary battery using the positive electrode active material.

Accordingly, as the content of Ni among the main transition metals constituting the positive electrode active material increases, the deterioration of the positive electrode active material due to repeated charging/discharging can be delayed by preventing or migrating the phenomenon of increasing the resistance of the positive electrode active material.

In addition, as the Ni content increases, the structural instability of the lithium composite oxide increases, and thus there can be an increasing possibility of the crystal structure of the lithium composite oxide changing or collapsing during the charging/discharging of a lithium secondary battery. Moreover, the structural instability of the lithium composite oxide can cause side reactions, resulting in the irreversible capability loss of the positive electrode active material.

However, according to the present invention, as regions with different concentrations of an arbitrary transition metal are locally formed in a primary particle constituting the positive electrode active material, a buffering effect against the change in crystal structure during the charging/discharging of a high-Ni lithium composite oxide can be provided, and therefore, the structural stability of the lithium composite oxide can be improved.

In the above, the embodiments of the present invention have been described, but it will be understood by those of ordinary skill in the art that the present invention may be changed and modified in various ways by addition, alteration, or deletion of components without departing from the spirit of the present invention defined in the appended claims.

## Claims

1. A positive electrode active material for a lithium secondary battery, comprising primary particles capable of reversible intercalation/deintercalation of lithium ions and a secondary particle in which the primary particles are aggregated,
wherein the primary particle is a lithium composite oxide comprising at least one selected from Ni, Co, Mn and Al as a transition metal,
when an average atomic proportion of an arbitrary transition metal present in the primary particle is a,
the secondary particle comprises
a primary particle in which a first region in which the average atomic proportion of the arbitrary transition metal present in the primary particle is greater than a, and a second region in which the average atomic proportion of the arbitrary transition metal is equal to or less than a coexist.

2. The positive electrode active material of claim 1, wherein based on a cross-sectional TEM image of the secondary particle, at least one region selected from the first and second regions in the primary particle in which the first and second regions coexist is locally present in the primary particle.

3. The positive electrode active material of claim 1, wherein based on a cross-sectional TEM image of the secondary particle, at least one region selected from the first and second regions in the primary particle in which the first and second regions coexist is present in a plurality in the primary particle.

4. The positive electrode active material of claim 1, wherein based on a cross-sectional TEM image of the secondary particle, at least one region selected from the first region and the second region extends along a direction from the surface to the center of the secondary particle in the primary particle in which the first region and the second region coexist.

5. The positive electrode active material of claim 4, wherein, when a length measured along the direction perpendicular to the extension direction of the first region in the primary particle is the width of the primary particle, the width of the first region is smaller than that of the primary particle.

6. The positive electrode active material of claim 1, wherein based on a cross-sectional TEM image of the secondary particle, the primary particle in which the first region and the second region coexist is locally present in a surface portion of the secondary particle.

7. The positive electrode active material of claim 1, wherein the primary particle is a lithium composite oxide comprising at least Ni and Co, and
when, in the primary particle in which the first region and the second region coexist, the average atomic proportion of Ni is a1 and the average atomic proportion of Co is a2,
the average atomic proportion (b1) of Ni in the first region is a1 or less, and
the average atomic proportion (b2) of Co in the first region is greater than a2.

8. The positive electrode active material of claim 1, wherein the primary particle is a lithium composite oxide comprising at least Ni and Mn, and
When, in the primary particle in which the first region and the second region coexist, the average atomic proportion of Ni present is a1, and the average atomic proportion of Mn is a3,
the average atomic proportion (b1) of Ni in the first region is a1 or less, and
the average atomic proportion (b3) of Mn in the first region is greater than a3.

9. The positive electrode active material of claim 1, wherein the primary particle further comprises a doping metal.

10. The positive electrode active material of claim 1, further comprising:
a coating layer that covers at least a part of the surfaces of the primary particle and the secondary particle, and
the coating layer comprises at least one oxide represented by the following formula:
[Formula 2] LiₐA_{b}O_{c}
Wherein,
A is at least one selected from Ni, Mn, Co, Fe, Cu, Nb, Mo, Ti, Al, Cr, Zr, Zn, Na, K, Ca, Mg, Pt, Au, B, P, Eu, Sm, W, V, Ba, Ta, Sn, Hf, Ce, Gd and Nd,
0≤a≤10, 0≤b≤8, and 2≤c≤13).

11. A positive electrode slurry composition, comprising:
a positive electrode active material according to any one of claims 1 to 10, a conductive material, and a binder.

12. A lithium secondary battery, comprising:
a positive electrode formed by coating a current collector with the positive electrode slurry composition of claim 11.
